**Europäisches Patentamt**

**European Patent Office**

**Office européen des brevets**

(19)

(11) Veröffentlichungsnummer : **0 039 501**
**B1**

(12) **EUROPÄISCHE PATENTSCHRIFT**

(45) Veröffentlichungstag der Patentschrift :
**11.04.84**

(21) Anmeldenummer : **81103350.5**

(22) Anmeldetag : **04.05.81**

(51) Int. Cl.³ : **H 03 F   1/30**, H 04 B   3/36,
**H 03 F   3/24**

(54) **Sendeverstärker für ferngespeiste Zwischenregeneratoren.**

(30) Priorität : **07.05.80 DE 3017476**

(43) Veröffentlichungstag der Anmeldung :
**11.11.81 Patentblatt 81/45**

(45) Bekanntmachung des Hinweises auf die Patenterteilung : **11.04.84 Patentblatt 84/15**

(84) Benannte Vertragsstaaten :
**BE CH GB IT LI NL SE**

(56) Entgegenhaltungen :
**DE-A- 2 843 919**
**FR-A- 2 258 048**
**FR-A- 2 353 181**
**US-A- 3 872 392**
**PHILIPS TELECOMMUNICATION REVIEW; vol. 37, Nr.**
**3, August 1979, S. 161**

(73) Patentinhaber : **SIEMENS AKTIENGESELLSCHAFT**
**Berlin und München Wittelsbacherplatz 2**
**D-8000 München 2 (DE)**

(72) Erfinder : **Dömer, Josef, Ing. grad.**
**Flossgatter 18**
**D-8021 Hohenschäftlarn (DE)**
Erfinder : **Thanhäuser, Gerhard, Dipl.-Ing.**
**Mozartstrasse 9**
**D-8905 Mering (DE)**

## Sendeverstärker für ferngespeiste Zwischenregeneratoren

Die Erfindung betrifft einen Sendeverstärker für ferngespeiste Zwischenregeneratoren, die in Übertragungsstrecken für gleichstromfreie digitale Signale einsetzbar sind und neben einer Ortungsschaltung für jede Übertragungsrichtung wenigstens einen Impulsergenerator mit einer Reihenschaltung aus einem Entzerrer, einer Regeneratorschaltung und einem Sendeverstärker enthalten, bei dem jedem Impulsregenerator zur Auftrennung des Signal- und des Fernspeiseweges eine erste Fernspeiseweiche vor- und eine zweite Fernspeiseweiche nachgeschaltet ist und jeder Impulsregenerator eine erste Zenerdiode vergleichsweise hoher Leistung, die dessen Fernspeseweg überbrückt, und weitere Zenerdioden geringerer Leistung enthält, die den Betriebsspannungsanschlüssen einzelner Teile der Reihenschaltung parallelgeschaltet sind.

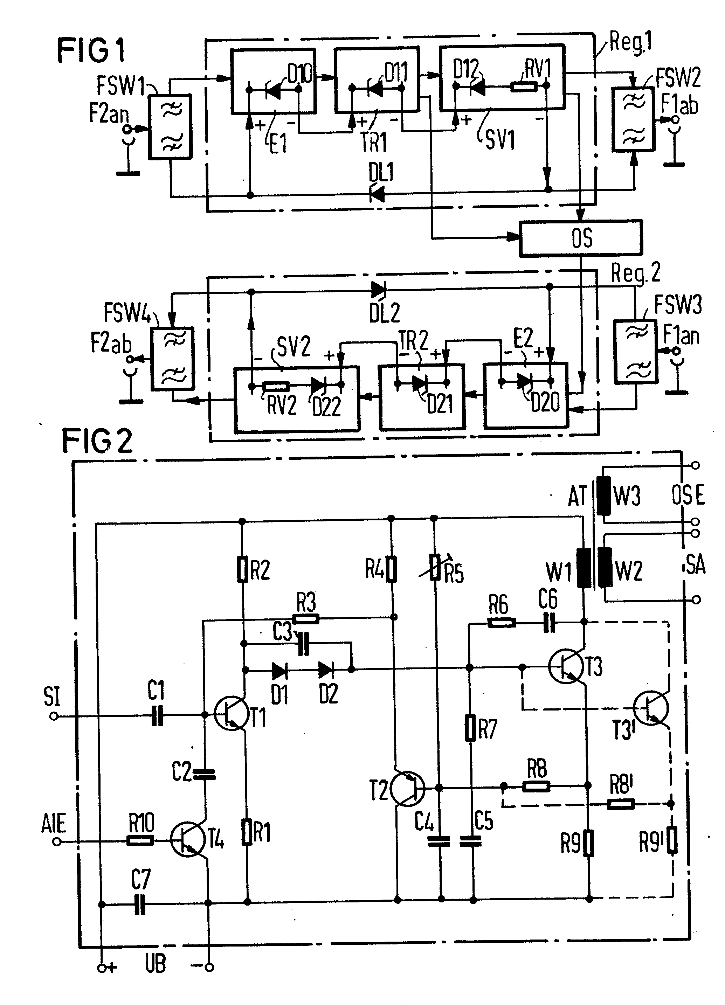

Übertragungsstrecken für digitale Signale enthalten in bestimmten Abständen in die Strecke eingesetzte Zwischenregeneratoren mit wenigstens einem Impulsgenerator für jede Übertragungsrichtung. Diese Impulsregeneratoren dienen dazu, die durch das Übertragungskabel verursachte. Dämpfung und Verzerrung der übertragenen Impulse und deren veränderte Lage im Zeitraster zu regenerieren. Dazu enthalten die Impulsregeneratoren eingangsseitig einen Entzerrer zur Aufhebung des Kabelfrequenzganges, danach die eigentliche Regeneratorschaltung und ausgangsseitig einen Sendeverstärker, der das Signal mit der für den nächsten Streckenabschnitt benötigten Amplitude erzeugt. In der Fig. 1 ist die Schaltung eines Zwischenregenerators mit zwei Impulsregeneratoren Reg1, Reg2 für die Übertragungsrichtung und F2an nach F1ab und für die Gegenrichtung von F1an nach F2ab dargestellt. Jeder der beiden Impulsregeneratoren enthält einen Entzerrer E1, E2, eine Regeneratorschaltung TR1, TR2 und einen Sendeverstärker SV1, SV2, die in dieser Reihenfolge im Signalweg hintereinander angeordnet sind. Mit der Regeneratorschaltung TR1 und dem Sendeverstärker SV1 der einen Übertragungsrichtung sind außerdem die Eingänge für die Fehlerortungsschleife OS des Zwischenregenerators verbunden, der Ausgang dieser Anordnung ist an einen Eingang des Entzerrers E2 der Gegenrichtung angeschaltet.

Die Stromversorgung der Zwischenregeneratoren erfolgt durch Fernspeisung über das Übertragungskabel, wobei der Fernspeisestrom am Kabelanschluß für die eine Übertragungsrichtung in den Fernspeiseabschnitt eingespeist wird, diesen bis zum Ende des Fernspeiseabschnittes durchläuft, dort in die Gegenrichtung eingekoppelt wird und über das Kabel und die Zwischenregeneratoren für die Gegenrichtung zur Speisestelle zurückfließt. Zur Auftrennung des Signal- und des Fernspeiseweges sind in den Zwischenregeneratoren für jede Übertragungs- und damit auch für jede Fernspeiserichtung Fernspeiseweichen FSW1 bzw. FSW3 vorgesehen, die empfangsseitig den Impulsregeneratoren vorgeschaltet sind und Fernspeisestrom und Übertragungssignal voneinander trennen ; ausgangsseitig sind entsprechende Weichen FSW2, FSW4 vorgesehen, die zur Zusammenführung von Fernspeisestrom und abgegebenem Übertragungssignal dienen. Zur Begrenzung des von den Impulsregeneratoren aufgenommenen maximalen Stroms dient eine Leistungszenerdiode DL1, DL2, die zwischen die beiden Speiseanschlüsse des Impulsregenerators geschaltet ist und nach Überschreiten der Zündspannung beispielsweise durch äußere Einwirkungen verursachte Überströme übernimmt. Innerhalb des Impulsregenerators besteht die eine Möglichkeit, daß Entzerrer, Regeneratorschaltung und Sendeverstärker parallelgeschaltet sind und sich der Fernspeisestrom in entsprechende Anteile aufteilt. Diese Möglichkeit wird verwendet, wenn aufgrund der Streckenauslegung ein vergleichsweise hoher Fernspeisestrom möglich ist, die jedem Regenerator zur Verfügung stehende Spannung aber vergleichsweise niedrig ist. Die andere Möglichkeit der Reihenschaltung von Entzerrer, Regeneratorschaltung und Sendeverstärker ist in der Fig. 1 dargestellt und wird verwendet, sofern der verfügbare Fernspeisestrom nur gering, die an jedem Regenerator anstehende Fernspeisespannung aber vergleichsweise hoch ist. In diesem Falle sind die an den einzelnen Schaltungen abfallenden Teilspannungen durch Zenerdioden vergleichsweise geringer Leistung D10 ... D12 bzw. D20 ... D22 stabilisiert. Derartige Zenerdioden vergleichsweise geringer Leistung haben gegenüber Leistungszenerdioden einen wesentlich ausgeprägten Zenerknick, so daß der dynamische Widerstand dieser Zenerdioden äußerst gering ist. Bei auftretenden Überströmen würden also die Zenerdioden geringer Leistung diese Überströme bis zu ihrer Zerstörung übernehmen, ohne daß der für das Zünden der Leistungszenerdioden DL1 bzw. DL2 notwendige Spannungsabfall überhaupt erreicht wird. Aus diesem Grunde ist in den Fernspeiseweg innerhalb der Impulsregeneratoren ein Vorwiderstand RV1 bzw. RV2 eingeschaltet, an dem bei auftretenden Überströmen schnell ein erheblicher Spannungsabfall auftritt, der schließlich zum Zünden der Leistungszenerdioden führt. Ein derartiger Vorwiderstand kann seine Schutzfunktion erst ab einer bestimmten Größe erfüllen, andererseits ist aber die Größe dieses Vorwiderstandes durch den im normalen Betrieb auftretenden Spannungsabfall begrenzt, der den Schaltungen nicht zur Verfügung steht und deshalb einen Verlust darstellt. Die Erzeugung derartiger Teilspannungen ist in der Philips Telecommunication Review, Vol. 37, No 3, August 1979, Seiten 161 bis 169 beschrieben.

Das Problem der Diemensionierung der Vorwiderstände und der Verringerung der an diesen Vorwiderständen auftretenden Verluste würde bei einer Sendeverstärkerschaltung ohne Zenerdiodenstabilisierung entfallen.

Aus der US-A-38 723 392 ist bereits ein direkt gekoppelter Kaskadenverstärker bekannt, der einen ersten NPN-Transistor enthält, dessen Basisanschluß über einen Kondensator mit dem Signaleingang und dessen Emitteranschluß über einen Widerstand mit dem negativen Betriebsspannungsanschluß verbunden ist. Der bekannte Kaskadenverstärker ist bei günstigem Rauschverhalten so aufgebaut, daß sich auch bei Veränderungen der Betriebsspannung der optimale Arbeitspunkt einstellt.

Die Aufgabe der Erfindung besteht also darin, eine Sendeverstärkerschaltung mit einem hinsichtlich des Stromverbrauchs dynamischen Verhaltens zu finden, das dem eines Widerstandes angenähert ist. Erfindungsgemäß wird die Aufgabe durch einen Sendeverstärker gelöst, bei dem ein erster Transistor vorgesehen ist, dessen Basisanschluß über einen ersten Kondensator mit dem Signaleingang, dessen Emitteranschluß über einen ersten Widerstand mit dem negativen Betriebsspannungsanschluß und dessen Kollektoranschluß über einen zweiten Widerstand mit dem positiven Betriebsspannungsanschluß und über eine durch einen dritten Kondensator überbrückte Diodenreihenschaltung, mit dem Basisanschluß eines dritten Transistors verbunden ist, daß der Basisanschluß des ersten Transistors über einen dritten Widerstand mit dem Emitteranschluß eines zweiten Transistors und über einen zweiten Kondensator mit dem Kollektoranschluß eines vierten Transistors verbunden ist, daß der Emitteranschluß des vierten Transistors mit dem negativen Betriebsspannungsanschluß und der Basisanschluß dieses Transistors über einen zehnten Widerstand mit einer Quelle für eine Austastimpulsspannung verbunden ist, daß der Emitteranschluß des zweiten Transistors über einen vierten Widerstand mit dem positiven Betriebsspannungsanschluß verbunden ist, daß der Kollektoranschluß dieses Transistors mit dem negativen Betriebsspannungsanschluß verbunden ist, daß der Basisanschluß des zweiten Transistors über einen einstellbaren fünften Widerstand mit dem positiven Betriebsspannungsanschluß und über einen vierten Kondensator mit dem negativen Betriebsspannungsanschluß sowie über einen achten Widerstand mit dem Emitteranschluß des dritten Transistors verbunden ist, daß dieser Emitteranschluß außerdem über einen neunen Widerstand mit dem negativen Betriebsspannungsanschluß und der Kollektoranschluß dieses Transistors über eine Reihenschaltung aus einem sechsten Kondensator und einem sechsten Widerstand mit dem Basisanschluß dieses Transistors verbunden ist, der über eine weitere Reihenschaltung aus einem siebten Widerstand und einem fünften Kondensator mit dem negativen Betriebsspannungsanschluß verbunden ist, daß der Kollektoranschluß des dritten Transistors mit dem einen Anschluß einer Primärwicklung eines Ausgangsübertragers verbunden ist, daß der andere Anschluß dieser Primärwicklung mit dem positiven Betriebsspannungsanschluß verbunden ist, daß die eine Sekundärwicklung des Ausgangsübertragers mit dem Signalausgang und die andere Sekundärwicklung mit einem Eingang der Ortungsschleife verbunden ist und daß als erster, dritter und vierter Transistor npn-Transistoren und als zweiter Transistor ein pnp-Transistor vorgesehen ist. Die Erfindung macht dabei von der Erkenntnis Gebrauch, daß die bisherigen Sendeverstärker aus Gründen des Wirkungsgrades als Schaltverstärker aufgebaut sind und deshalb eine Zenerdiode benötigen, die in den Impulspausen den für die Impulsaussendung benötigten Strom übernimmt, während dies bei einem kontinuierlichen Verstärker nicht notwendig ist. Von besonderem Vorteil bei der erfindungsgemäßen Lösung ist, daß für die Stabilisierung der Betriebsspannungen des Entzerrers und der Regeneratorschaltung Zenerdioden mit außerordentlich scharfem Zenerknick verwendet werden können, so daß die Arbeitsweise dieser Schaltungen von Schwankungen des Speisestroms in hohem Maße entkoppelt ist. Ein weiterer Vorteil der erfindungsgemäßen Lösung ist die Verwendung eines Eintaktausgangsübertragers anstelle eines Gegentaktübertragers, der insbesondere bei hohen Schaltgeschwindigkeiten nur schwierig völlig symmetrisch aufgebaut werden kann. Weitere Vorteile der erfindungsgemäßen Lösungen sind die Notwendigkeit einer nur geringen Betriebspannung und ein auch bei hohen Frequenzen definierter Ausgangswiderstand zur reflexionsfreien Anpassung an eine nachgeschaltete Leitung.

Bei großen Feldlängen zwischen den einzelnen Zwischenregeneratoren ist eine Variante der Erfindung zweckmäßig, bei der dem dritten Transistor wenigstens ein weiterer Transistor parallelgeschaltet ist und dessen Basisanschluß und dessen Kollektoranschluß mit den entsprechenden Anschlüssen des dritten Transistors verbunden sind und der Emitteranschluß dieses Transistors über einen ersten zusätzlichen Widerstand mit dem Basisanschluß des zweiten Transistors und über einen zweiten zusätzlichen Widerstand mit dem negativen Betriebsspannungsanschluß verbunden ist.

Die Erfindung soll im folgenden anhand der Zeichnung näher erläutert werden.

In der Zeichnung zeigt

Figur 1 einen ferngespeisten PCM-Regenerator mit Reihenspeisung der einzelnen Schaltungsteile und

Figur 2 die Detailschaltung eines erfindungsgemäßen Sendeverstärkers.

Die Regeneratorschaltung nach der Fig. 1 wurde bei der Darstellung des Standes der Technik bereits weitgehend erläutert, so daß auf zusätzliche Ausführungen verzichtet wird.

Der in der Fig. 2 dargestellte zweistufige Sendeverstärker enthält eine mit einem ersten npn-Transistor T1 aufgebaute Eingangsstufe, deren Basisanschluß über einen ersten Kondensator C1

mit dem Signaleingang SI verbunden ist. Der Emitteranschluß des ersten Transistors T1 ist über einen ersten Widerstand R1 mit dem Anschluß für die negative Betriebsspannung – UB verbunden, der Kollektoranschluß dieses Transistors ist über eine zweiten Widerstand R2 mit dem Anschluß für die positive Betriebsspannung + UB und außerdem über eine mittels eines dritten Kondensators C3 überbrückte Diodenreihenschaltung aus zwei Dioden D1, D2 mit dem Basisanschluß eines dritten Transistors T3 vom npn-Typ verbunden. Der Basisanschluß des ersten Transistors T1 ist außerdem über einen dritten Widerstand R3 mit dem Emitteranschluß eines zweiten Transistors T2 vom pnp-Typ und über einen zweiter Kondensator C2 mit dem Kollektoranschluß eines vierten Transistors T4 vom npn-Typ verbunden. Während der Emitteranschluß dieses vierten Transistors mit dem Anschluß für die negative Betriebsspannung −UB verbunden ist, ist der Basisanschluß dieses Transistors über einen zehnten Widerstand R10 mit einem Eingang AIE für Austastimpulse verbunden. Der Emitteranschluß des zweiten Transistors T2 ist über einen vierten Widerstand R4 an den positiven Betriebsspannungsanschluß gelegt, während der Kollektoranschluß dieses Transistors T2 direkt und der Basisanschluß dieses Transistors T2 über einen vierten Kondensator C4 mit dem Anschluß für die negative Betriebsspannung −UB verbunden sind. Der Basisanschluß dieses Transistors T2 ist außerdem über einen einstellbaren fünften Widerstand R5 mit dem positiven Betriebsspannungsanschluß und über einen achten Widerstand R8 mit dem Emitteranschluß des dritten Transistors T3 verbunden, der außerdem über einen neunten Widerstand R9 mit dem negativen Betriebsspannungsanschluß −UB verbunden ist. Der Basisanschluß des dritten Transistors T3 ist über eine Reihenschaltung aus einem fünften Kondensator C5 und einem siebten Widerstand R7 mit dem negativen Betriebsspannungsanschluß −UB und über eine weitere Reihenschaltung aus einem sechsten Kondensator C6 und einem sechsten Widerstand R6 mit dem Kollektoranschluß dieses Transistors T3 verbunden, an den auch der eine Anschluß der Primärwicklung W1 eines Ausgangsübertragers AT führt, dessen erste Sekundärwicklung W2 mit dem Signalausgang SA und dessen zweite Sekundärwicklung W3 mit der Ortungsschleife OSE verbunden ist. Zusätzlich ist für höhere Sendeleistung ein weiterer Endtransistor T3' vorgesehen, dessen Basis- und dessen Kollektoranschluß mit den entsprechenden Anschlüssen des dritten Transistors T3 verbunden sind und dessen Emitteranschluß über einen ersten zusätzlichen Widerstand R8' mit dem Basisanschluß des zweiten Transistors T2 und über einen weiteren zusätzlichen Widerstand R9 mit dem negativen Betriebsspannungsanschluß −UB verbunden sind. Zwischen die beiden Betriebsspannungsanschlüsse ist zur Siebung und Überbrückung der Wechselspannungen ein siebter Kondensator C7 geschaltet.

Der Sendeverstärker besteht also aus einer Vorverstärkerstufe mit einer parallel geschalteten Stufe zur Einblendung von Austastimpulsen im Fehlerortungsbetrieb, die wegen der bei Eintreffen von Impulsen niederohmigen Verbindung zwischen Kollektor und Emitter keine Betriebsspannung benötigt und auch ohne Überbrückung des Gleichstromweges zum Kollektor auskommt, einer Endverstärkerstufe und einer Regelverstärkerstufe zur Regelung des Arbeitspunktes der Vorverstärkerstufe und damit auch der Endverstärstufe. Die Regelung geht dabei so vor sich, daß ein dem Emitterstrom und damit auch näherungsweise dem Kollektorstrom des dritten Transistors T3 proportionaler Spannunhsabfall am neunten Widerstand R9 über den achten Widerstand R8 und den vierten Kondensator C4 gesiebt an den Basisanschluß des Emitterfolgetransistors T2 geführt und von diesem über den dritten Widerstand R3 an den Basisanschluß des ersten Transistors T1 abgegeben wird. Dabei wird die Schwellspannung der Emitter-Basisdiode des ersten Transistors T1 und deren Temperaturabhängigkeit weitgehend durch den Emitterfolgetransistor T2 kompensiert. Durch diese Kompensation wird eine gute Temperaturstabilität auch bei kleinen Spannungsabfällen am Emitterwiderstand R9 des dritten Transistors T3 erreicht, so daß die Forderung nach einer möglichst geringen Betriebsspannung für die Endstufe mit Transistor T3 eingehalten werden kann.

Zur Veranschaulichung der Regelung sei zunächst angenommen, daß der Emitterstrom des dritten Transistors T3 ansteigt. Der damit verbundene Anstieg des Spannungsabfalls an dessen Emitterwiderstand R9 führt über den achten Widerstand R8 und den zweiten Transistor T2 sowie über den dritten Widerstand R3 zu einer entsprechend höheren Basisspannung am ersten Transistor T1. Dadurch steigt der Kollektorstrom dieses Transistors an, so daß dessen Kollektorspannung und damit auch die Basisspannung am dritten Transistor T3 abfällt. Die durch den dritten Kondensator C3 überbrückte Diodenreihenschaltung D1, D2 dient dabei lediglich zur Pegelanpassung zwischen dem Kollektor des ersten Transistors T1 und der Basis des dritten Transistors T3, so daß für den ersten Transistor T1 eine ausreichend hohe Kollektorspannung zur Verfügung steht.

Die Umlaufverstärkung in dieser Arbeitspunktregelschaltung ist im wesentlichen durch das Verhältnis der Widerstandswerte des zweiten Widerstandes R2 zum ersten Widerstand R1 gegeben. Durch Veränderung dieses Verhältnisses ist in gewissen Grenzen eine Einstellung des dynamischen Widerstandes an den Stromversorgungsklemmen möglich, wobei eine Erhöhung der Umlaufverstärkung ebenfalls eine Erhöhung dieses Widerstandes ergibt. Zweckmäßigerweise wird bei dieser Einstellung der dynamische Widerstand etwa gleich dem statischen Widerstand, der durch den Quotienten von Betriebsspannung und Betriebsstrom gegeben ist, gewählt, so daß eine relative Änderung des Betriebsstromes zu einer annähernd gleichen relativen Änderung der Betriebsspannung führt. Dadurch bleibt der Arbeitspunkt der Endstufe im optimalen Aussteuerbereich. Die Dimensionierung des aus dem achten Widerstand R8 und dem vierten Kondensator C4 sowie des Kondensators C7 ist von dem Frequenzbereich abhängig, in dem tieffrequente Störungen auftreten. Die Dimensionierung soll so erfolgen, daß im Frequenzbereich tieffrequenter Störungen der dynamische Widerstand an den Stromversorgungsschlüssen wirksam ist. Während im Übertragungsbereich des Verstärkers der Kondensator C7 einen Kurzschluß bilden soll, damit die Umlaufverstärkung der Regelung so kleinbleibt, daß sie zu keinem nennenswerten Verstärkungsverlust führt.

Der Abgleichwiderstand R5 dient zum exakten Abgleich der Betriebsspannung bei eingeprägtem Betriebsstrom, in dem ein kleiner Teil der Betriebsspannung, der etwa gleich dem Quotienten der Widerstände R8 und R5 ist, in die Regelschaltung eingespeist wird. Eine Verringerung des Widerstandes R5 führt dabei zu einer Erhöhung der Betriebsspannung bei eingeprägtem Betriebsstrom.

Der im Übertragungsbereich wirksame Ausgangswiderstand der Endstufe mit Transistor T3 wird durch eine kombinierte Strom-Spannungsgegenkopplung erzeugt. Die Stromgegenkopplung erfolgt im wesentlichen durch den Emitterwiderstand R9, die Spannungsgegenkopplung ergibt sich aus der Spannungsteilung über den Widerstand R6 und über den Innenwiderstand der Vorverstärkerstufe mit dem Transistor T1. Dieser Innenwiderstand seinerseits ergibt sich aus der Parallelschaltung der Widerstände R2 und R7. Die Kondensatoren C5 und C6 sind so gewählt, daß sie das Verhalten der Endstufe bei tiefen Frequenzen nicht beeinflussen, so daß dieses ausschließlich durch die Arbeitspunktregelung bestimmt wird.

Zur Erhöhung der Ausgangsleitung kann die Anzahl der Endstufentransistoren erhöht werden; dabei wird über die zusätzlichen Widerstände R8' und R9' die Auswirkung von Exemplarstreuungen vermindert.

### Ansprüche

1. Sendeverstärker für ferngespeiste Zwischenregeneratoren, die in Übertragungsstrecken für gleichstromfreie digitale Signale einsetzbar sind und neben einer Ortungsschaltung für jede Übertragungsrichtung wenigstens einen Impulsregenerator mit einer Reihenschaltung aus einem Entzerrer, einer Regeneratorschaltung und einem Sendeverstärker enthalten, bei dem jedem Impulsregenerator zur Auftrennung des Signal- und des Fernspeiseweges eine erste Fernspeiseweiche vor- und eine zweite Fernspeiseweiche nachgeschaltet ist und jeder Impulsregenerator eine erste Zenerdiode vergleichsweise hoher Leistung, die dessen Fernspeiseweg überbrückt, und weitere Zenerdioden geringerer Leistung enthält, die den Betriebsspannungsanschlüssen einzelner Teile der Reihenschaltung parallelgeschaltet sind, dadurch gekennzeichnet, daß ein erster Transistor (T1) vorgesehen ist, dessen Basisanschluß über einen ersten Kondensator (C1) mit dem Signaleingang (SI), dessen Emitteranschluß über einen ersten Widerstand (R1) mit dem negativen Betriebsspannungsanschluß (− UB) und dessen Kollektoranschluß über einen zweiten Widerstand (R2) mit dem positiven Betriebsspannungsanschluß (+ UB) und über eine durch einen dritten Kondensator (C3) überbrückte Diodenreihenschaltung (D1, D2) mit dem Basisanschluß eines dritten Transistors (T3) verbunden ist, daß der Basisanschluß des ersten Transistors (T1) über einen dritten Widerstand (R3) mit dem Emitteranschluß eines zweiten Transistors (T2) und über einen zweiten Kondensator (C2) mit dem Kollektoranschluß eines vierten Transistors (T4) verbunden ist, daß der Emitteranschluß des vierten Transistors (T4) mit dem negativen Betriebsspannungsanschluß (− UB) und der Basisanschluß dieses Transistors über einen zehnten Widerstand (R10) mit einer Quelle (AIE) für eine Austastimpulsspannung verbunden ist, daß der Emitteranschluß des zweiten Transistors (T2) über einen vierten Widerstand (R4) mit dem positiven Betriebsspannungsanschluß (+ UB) verbunden ist, daß der Kollektoranschluß dieses Transistors mit dem negativen Betriebsspannungsanschluß (− UB) verbunden ist, daß der Basisanschluß des zweiten Transistors (T2) über einen einstellbaren fünften Widerstand (R5) mit dem positiven Betriebsspannungsanschluß und über einen vierten Kondensator (C4) mit dem negativen Betriebsspannungsanschluß sowie über einen achten Widerstand (R8) mit dem Emitteranschluß des dritten Transistors (T3) verbunden ist, daß dieser Emitteranschluß außerdem über einen neunten Widerstand (R9) mit dem negativen Betriebsspannungsanschluß (− UB) und der Kollektoranschluß dieses Transistors über eine Reihenschaltung aus einem sechsten Kondensator (C6) und einem sechsten Widerstand (R6) mit dem Basisanschluß dieses Transistors verbunden ist, der über eine weitere Reihenschaltung aus einem siebten Widerstand (R7) und einem fünften Kondensator (C5) mit dem negativen Betriebsspannungsanschluß verbunden ist, daß der Kollektoranschluß des dritten Transistors mit dem einen Anschluß einer Primärwicklung (W1) eines Ausgangsübertragers (AT) verbunden ist, daß der andere Anschluß dieser Primärwicklung mit dem positiven Betriebsspannungsanschluß verbunden ist, daß die eine Sekundärwicklung (W2) des Ausgangsübertragers mit dem Signalausgang (SA) und die andere Sekundärwicklung (W3) mit einem Eingang (OSE) der Ortungsschleife verbunden ist und daß als erster, dritter und vierter Transistor (T1, T3, T4) npn-Transistoren und als zweiter Transistor (T2) ein pnp-Transistor vorgesehen ist.

2. Sendeverstärker nach Anspruch 1, dadurch gekennzeichnet, daß dem dritten Transistor (T3) wenigstens ein weiterer Transistor (T3') parallelgeschaltet ist und daß dessen Basisanschluß und dessen Kollektoranschluß mit den entsprechenden Anschlüssen des dritten Transistors verbunden sind und daß der Emitteranschluß dieses Transistors über einen ersten zusätzlichen Widerstand (R8') mit dem Basisanschluß des zweiten Transistors (T2) und über einen zweiten zusätzlichen Widerstand (R9') mit dem negativen Betriebsspannungsanschluß (– UB) verbunden ist.

## Claims

1. A transmitting amplifier for remote-fed intermediate regenerators which can be inserted into transmission paths for d. c.-free digital signals, and which include at least one pulse regenerator having a series connection consisting of an equaliser, in addition to a location circuit for each transmission direction, a regenerator circuit and a transmitting amplifier, wherein in order to divide the signal path and the remote feeding path a first remote feed separating filter is connected preceding each pulse regenerator and a second remote feed separating filter is connected following each pulse regenerator, and each pulse regenerator includes a first Zener diode of comparatively high capacity, which bridges the remote feeding path of the pulse regenerator, and includes further Zener diodes of lower capacity connected parallel to the operating voltage terminals of individual components of the series connection, characterised in that there is provided a first transistor (T1), whose base terminal is connected via a first capacitor (C1) to the signal input (SI), whose emitter terminal is connected via a first resistor (R1) to the negative operating voltage terminal (– UB) and whose collector terminal is connected via a second resistor (R2) to the positive operating voltage terminal (+ UB) and to the base terminal of a third transistor (T3) via a tandem diode series combination (D1, D2) bridged by a third capacitor (C3), that the base terminal of the first transistor (T1) is connected via a third resistor (R3) to the emitter terminal of a second transistor (T2) and via a second capacitor (C2) to the collector terminal of a fourth transistor (T4), that the emitter terminal of the fourth transistor (T4) is connected to the negative operating voltage terminal (– UN) and the base terminal of this transistor is connected via a tenth resistor (R10) to a source (AIE) for a blanking pulse voltage, that the emitter terminal of the second transistor (T2) is connected via a fourth resistor (R4) to the positive operating voltage terminal (+ UB), that the collector terminal of this transistor is connected to the negative operating voltage terminal (– UB), that the base terminal of the second transistor (T2) is connected via an adjustable fifth resistor (R5) to the positive operating voltage terminal and via a fourth capacitor (C4) to the negative operating voltage terminal and via an eighth resistor (R8) to the emitter terminal of the third transistor (T3), that this emitter terminal is further connected via a ninth resistor (R9) to the negative operating voltage terminal (– UB) and the collector terminal of this transistor is connected via a series connection consisting of a sixth capacitor (C6) and a sixth resistor (R6) to the base terminal of this transistor which is connected to the negative operating voltage via a further series connection consisting of a seventh resistor (R7) and a fifth capacitor (C5), that the collector terminal of the third transistor is connected to the terminal of a primary winding (W1) of an output transmitter (AT), that the other terminal of this primary winding is connected to the positive operating voltage terminal, that one secondary winding (W2) of the output transmitter is connected to the signal output (SA) and any other secondary winding (W3) is connected to an input (OSE) of the location loop, and that npn-transistors are provided as first, third and fourth transistor (T1, T3, T4) and a pnp-transistor is provided as second transistor (T2).

2. A transmitting amplifier as claimed in Claim 1, characterised in that at least one further transistor (T3') is connected parallel to the third transistor (T3), and that its base terminal and its collector terminal are connected to the corresponding terminals of the third transistor, and that the emitter terminal of this transistor is connected via a first additional resistor (R8') to the base terminal of the second transistor (T2) and via a second additional resistor (R9') to the negative operating voltage terminal (– UB).

## Revendications

1. Amplificateur d'émission pour des récepteurs télé-alimentés susceptibles d'être mis en œuvre dans des voies de transmission pour des signaux numériques dépourvus de courant continu et qui comportent en plus d'un circuit de localisation pour chaque sens de transmission au moins un générateur d'impulsions avec un circuit série constitué par un égaliseur, un circuit régénérateur et un amplificateur d'émission, dans lequel avec chaque générateur d'impulsions, et en vue de séparer la voie de signaux et celle de la télé-alimentation, est relié en amont un premier aiguillage de télé-alimentation et en aval un second aiguillage de télé-alimentation, et chaque générateur d'impulsions comportant une première diode Zener, de puissance comparativement élevée, qui en shunte sa voie de télé-alimentation et une seconde diode Zener de moindre puissance, lesdites diodes étant montées en parallèle aux bornes d'application de la tension de fonctionnement des différents éléments du circuit série, caractérisé par le fait qu'un premier transistor (T1) est prévu, dont la borne de base est reliée, par l'intermédiaire d'un premier condensateur (C1), à l'entrée des signaux (SI), dont la borne d'émetteur est reliée, par l'intermédiaire d'une première résistance (R1), à la borne négative d'application de la tension de service (− UB) et dont la borne de collecteur est reliée, par l'intermédiaire d'une seconde résistance (R2), à la borne positive de la tension de fonctionnement (+ UB) et, par l'intermédiaire d'un circuit série de diodes (D1, D2) shunté par un troisième condensateur (C3), à la borne de base d'un troisième transistor (T3), que la borne de base du premier transistor (T1) est reliée, par l'intermédiaire d'une troisième résistance (R3), à la borne d'émetteur d'un second transistor (T2) et, par l'intermédiaire d'un second condensateur (C2), à la borne de collecteur d'un quatrième transistor (T4), que la borne d'émetteur du quatrième transistor (T4), que la borne d'émetteur du quatrième transistor (T4) est reliée à la borne négative de la tension de fonctionnement (− UB) et la borne de base de ce transistor est reliée, par l'intermédiaire d'une dixième résistance (R10), à une source (AIE) pour une tension d'impulsions de suppression, que la borne d'émetteur du second transistor (T2) est reliée, par l'intermédiaire d'une quatrième résistance (R4), à la borne positive de la tension de fonctionnement (+ UB), que la borne de collecteur de ce transistor est reliée à la borne négative de la tension de fonctionnement (− UB), que la borne de base du second transistor (T2) est reliée, par l'intermédiaire d'une cinquième résistance réglable (R5), à la borne positive de la tension de fonctionnement et, par l'intermédiaire d'un quatrième condensateur (C4), à la borne négative de la tension de fonctionnement de même que par l'intermédiaire d'une huitième résistance (R8), à la borne d'émetteur du troisième transistor (T3), que cette borne d'émetteur est en outre reliée, par l'intermédiaire d'une neuvième résistance (R9), à la borne négative de la tension de fonctionnement (− UB) et la borne de collecteur de ce transistor, par l'intermédiaire d'un circuit série constitué par un sixième condensateur (C6) et par une sixième résistance (R6), à la borne de base de ce transistor qui est reliée, par l'intermédiaire d'un autre circuit série constitué par une septième résistance (R7) et par un cinquième condensateur (C5), à la borne négative de la tension d'alimentation, que la borne de collecteur du troisième transistor est reliée à une première borne d'un enroulement primaire (W1) d'un translateur de sortie (AT), que l'autre borne de l'enroulement primaire est reliée à la borne positive de la tension de fonctionnement, que le premier enroulement secondaire (W2) du translateur de sortie est relié à la sortie des signaux (SA) et l'autre enroulement secondaire (W3) est relié à une entrée (OSE) d'une boucle de localisation, et qu'il est prévu, en tant que premier, troisième et quatrième transistors (T1, T3, T4) des transistors npn et comme second transistor (T2) un transistor pnp.

2. Amplificateur d'émission selon la revendication 1, caractérisé par le fait qu'en parallèle sur le troisième transistor (T3) sont branchés au moins un autre transistor (T3') et que sa borne de base et sa borne de collecteur sont reliées avec les bornes correspondantes du troisième transistor, et que la borne d'émetteur de ce transistor est reliée, par l'intermédiaire d'une première résistance supplémentaire (R8'), à la borne de base du second transistor (T2) et, par l'intermédiaire d'une seconde résistance supplémentaire (R9'), à la borne négative de la tension de fonctionnement (− UB).

FIG 1

FIG 2